# EUROPÄISCHE PATENTSCHRIFT

(11) **EP 0 431 295 B1**
(45) Veröffentlichungstag und Bekanntmachung des Hinweises auf die Patenterteilung: **04.08.1993**
(21) Anmeldenummer: 90120303.4
(22) Anmeldetag: 23.10.1990
(51) Int. Cl.: B65B 65/02, F16D 43/26, F16H 3/12, F16D 23/02

(54) **Vorrichtung zum Ein- und Auskuppeln einer Antriebswelle einer Arbeitsstation einer Maschine, insbesondere einer Verpackungsmaschine**
Apparatus for clutching and declutching the drive shaft of a machine workstation, in particular a packaging machine
Dispositif pour embrayer et débrayer l'arbre menant d'une station de travail d'une machine, notamment d'une emballeuse

(30) Priorität: 02.12.1989 DE 3939991
(43) Veröffentlichungstag der Anmeldung: 12.06.1991
(73) Patentinhaber: Benz & Hilgers GmbH, 40470 Düsseldorf (DE)
(72) Erfinder: Fischer, Georg, W-5620 Velbert 1 (DE); Pröpper, Wilhelm, W-4018 Langenfeld (DE); Jünkersfeld, Harald, W-5600 Wuppertal 1 (DE)
(74) Vertreter: Pfeiffer, Helmut, Dipl.-Ing.

(56) Entgegenhaltungen:
- DE-B- 1 161 085
- DE-B- 1 215 450
- FR-A- 2 343 164
- US-A- 3 048 247
- US-A- 3 860 101

## Beschreibung

Die Erfindung bezieht sich auf eine Vorrichtung zum Ein- und Auskuppeln einer getriebenen Antriebswelle einer Arbeitsstation einer Maschine, insbesondere einer Verpackungsmaschine, mit bzw. von einer Hauptantriebswelle der Maschine mittels einer formschlüssig wirkenden Kupplung, vorzugsweise einer Einzahnklauenkupplung und mit einer die Antriebswelle mit nahezu gleicher Drehzahl und gleicher Drehbewegung wie die Hauptantriebswelle vorbeschleunigenden Beschleunigereinrichtung.

Eine Vorrichtung der eingangs genannten Art ist aus DE-B-12 15 450 bekanntgeworden. Bei dieser bekannten Vorrichtung ist die formschlüssig wirkende Kupplung als druckmittelbetätigte Zahnkupplung ausgebildet, während als Synchronisier- bzw. Beschleunigereinrichtung eine druckmittelbetätigte Lamellenkupplung vorgesehen ist. Die treibende Welle und die angetriebene Welle sind gleichachsig angeordnet und dementsprechend sind auch die Reibungskupplung und die Zahnkupplung in axialer Richtung hintereinander angeordnet, wobei zum Ein- und Auskuppeln der Zahnkupplung einerseits und der Reibungskupplung andererseits jeweils ein Betätigungszylinder vorgesehen ist.

Zum Einrücken der Kupplung wird zunächst ein Druckraum des einen Betätigungszylinders mit Druckmittel beaufschlagt, so daß die Lamellenkupplung einrückt, bis die Geschwindigkeit beider Kupplungshälften synchronisiert ist. Gleichzeitig wird der zweite Betätigungszylinder derart bewegt, daß die Zahnkränze der Zahnkupplung mit ihren Stirnflächen gegeneinander zu liegen kommen. Bei einer nachfolgenden Beaufschlagung eines zweiten Druckraumes wird der erste Betätigungszylinder geringfügig vom Lamellenpaket abgehoben, so daß ein Schlupf der Lamellenkupplung möglich wird. Durch diesen Schlupf kommen die Zähne der Zahnkupplung auf Lücke zu stehen und gleiten ineinander. Durch diesen speziellen Aufbau und die besondere Anordnung der Zahnkupplung einerseits und der Reibungskupplung andererseits ergibt sich eine recht aufwendige Anordnung, die nicht nur störanfällig ist, sondern auch von außen recht schwer zugänglich ist.

Der Erfindung liegt die Aufgabe zugrunde, eine Vorrichtung der eingangs genannten Art zu schaffen, bei der ein zum weitgehenden stoßfreien Einkuppeln der Antriebswelle mit der Hauptantriebswelle vorgesehenes Vorbeschleunigen der Antriebswelle mit nahezu gleicher Drehzahl und gleicher Drehbewegung wie die Hauptantriebswelle durch eine baulich einfache und wenig Platz beanspruchende und leicht zugängliche Anordnung erfolgt.

Diese Aufgabe wird erfindungsgemäß dadurch gelöst, daß die Hauptantriebswelle und die Antriebswelle parallel zueinander versetzt angeordnet sind und die Beschleunigereinrichtung eine Verstelleinheit aufweist, die an ihrem einen Ende an einem Maschinengehäuse und an ihrem anderen Ende an einem Hebel angelenkt ist, der über einen Freilauf auf der mit einer Bremse verbundenen Antriebswelle schwenkbar gelagert ist und im Bereich seines freien Endes eine Andrückrolle aufweist, die mit einem auf der Hauptantriebswelle drehfest angeordneten Kurvenkörper zusammenwirkt.

Mit den Mitteln nach der Erfindung kann die Antriebswelle auf überaus einfache Weise auf die gewünschte gleiche Drehzahl und in drehgleiche Drehbewegung gebracht werden. Als Verstelleinheit eignet sich sowohl ein gezielt angesteuerter Druckluftzylinder, als auch ein genau steuerbarer Hydraulikzylinder oder aber auch ein Hubmagnet. Die erfindungsgemäß ausgebildete Beschleunigereinrichtung ermöglicht auf einfache Weise beim Einrasten der Einzahnklauenkupplung eine weitgehend stoßfreie Drehmitnahme.

Damit der Beschleunigungsvorgang immer wieder an einem genau festgelegten, z. B. durch ein Diagramm genau vorgegebenen Punkt wiederholgenau erfolgt, ist der Kurvenkörper vorzugsweise als offene Kurvenscheibe ausgebildet.

Durch die Ausbildung der Bremse als Magnetbremse wird beim Auskuppeln der Antriebswelle mit Sicherheit ein unerwünschtes Nachlaufen vermieden.

Weiterhin ist es für die Erfindung von Vorteil, wenn ein über eine Keil-Nut-Verbindung auf der Antriebswelle axial verschiebbarer erster Kupplungsteil der formschlüssig wirkenden Kupplung über eine Betätigungseinrichtung mit einer eine Zylinder-Kolben-Einheit aufweisenden einstellbaren Verstelleinrichtung verbunden ist und/oder ein zweiter Kupplungsteil der forschlüssig wirkenden Kupplung mit einem auf der Antriebswelle sitzenden Zahnrad verbunden ist, das über einen Endlostrieb mit einem auf der parallel zur Antriebswelle angeordneten Hauptantriebswelle sitzenden Antriebszahnrad in Wirkverbindung steht.

Ein bevorzugtes Ausführungsbeispiel der Erfindung ist in der Zeichnung dargestellt und wird im folgenden näher erläutert. Es zeigen:
- Fig. 1: eine Aufsicht auf einen Teil einer als Becher-Füll- und Verschließmaschine ausgebildeten Verpackungsmaschine und
- Fig. 2: einen Schnitt entlang der Linie II - II der Fig. 1.

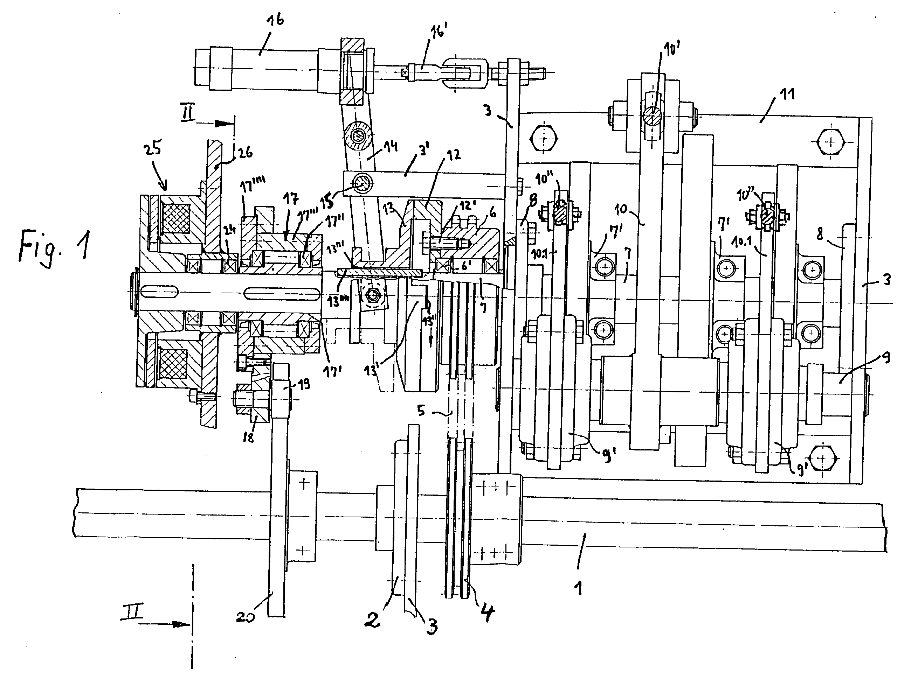

Wie aus Fig. 1 hervorgeht, ist eine Hauptantriebswelle 1 einer nur teilweise dargestellten Becher-Füll- und Verschließmaschine über ein Lager 2 in einer Gehäusewandung 3 der Maschine drehbar gelagert. Die Hauptantriebswelle 1 wird dabei von einem nicht dargestellten Antriebsmotor umlaufend angetrieben. Auf der Hauptantriebswelle 1 sitzt ferner ein als Kettenrad ausgebildetes Antriebszahnrad 4, das über einen als Kette 5 ausgebildeten Endlostrieb mit einem gleichfalls als Kettenrad ausgebildeten Zahnrad 6 antriebsmäßig verbunden ist. Das Zahnrad 6 ist über Wälzlager 6' auf einer Antriebswelle 7 drehbar gelagert, die sich parallel zur Hauptantriebswelle 1 erstreckt. Die Kurvenstücke 7' tragende Antriebswelle 7 ist in Lagern 8 der Maschinenwandung 3 gelagert. Parallel zur Antriebswelle 7 ist eine Hebelwelle 9 angeordnet, die gleichfalls in der Gehäusewandung 3 gelagert ist und über nachfolgend näher beschriebene Hebel und nicht dargestellte Nuten und Kurvenrollen mit der Antriebswelle 7 in Wirkverbindung steht. Auf der Hebelwelle 9 sitzt ein Hebel 10, der an seinem freien Ende über ein dort angelenktes Gestänge 10' mit einer nicht dargestellten Dosierstation der Verpackungsmaschine antriebsmäßig in Verbindung steht. Seitlich des Hebels 10 sind über Lagerstellen 9' weitere Hebel 10.1 gelagert, die an ihren freien Enden angelenkte Gestänge 10'' aufweisen und mit diesen zu gleichfalls nicht dargestellten Drehschiebern der Dosiereinrichtung führen.

Zur Stabilisierung der Lagerung der beiden Wellen 7, 9 ist eine Traverse 11 vorgesehen.

An dem Zahnrad 6 ist über Schrauben 12' ein erstes angetriebenes Kupplungsteil 12 befestigt, das in der angegebenen Pfeilrichtung umlaufend angetrieben werden kann. Das Kupplungsteil 12 arbeitet mit einem weiteren Kupplungsteil 13 zusammen, das an seiner dem Kupplungsteil 12 zugewandten Fläche einen Zahn 13' aufweist und mit einer Ausnehmung 13'' des Kupplungsteils 12 zusammenwirkt. Die beiden Kupplungsteile 12, 13 bilden Teile einer sogenannten Einzahn-Kupplung.

Zum Ein- und Ausrücken, d.h. zum axialen Verschieben des Kupplungsteils 13 auf der Antriebswelle 7 sind im Kupplungsteil 13 eine Keilnut 13‴ und auf der Antriebswelle 7 sind Keil 13'''' vorhanden. Zur Betätigung, d.h. zum Ein- und Ausrasten der Einzahn-Kupplung dient ein Betätigungshebel 14, der bei 15 an einem feststehenden Teil 3' der Wandung 3 der Maschine schwenkbar gelagert ist. Zum Verstellen des Kupplungsteils 13 über den Betätigungshebel 14 dient eine Zylinder-Kolben-Einheit 16, die an ihrem einen Ende über ein einstellbares Zugglied 16' an der Wandung 3 der Maschine aufgehängt und im übrigen in der Maschine selbst gelagert ist.

Auf der Antriebswelle 7 ist ferner ein Freilauf 17 angeordnet, der aus einem fest auf der Antriebswelle 7 sitzenden inneren Ring 17' und einem über Wälzlager 17'' gelagerten Außenring 17‴ besteht. Der Außenring ist über eine Scheibe 17'''' mit einem Hebel 18 verbunden, der über eine Andrückrolle 19 mit einer auf der Hauptantriebswelle 1 sitzenden Kurvenscheibe 20 zusammenwirkt.

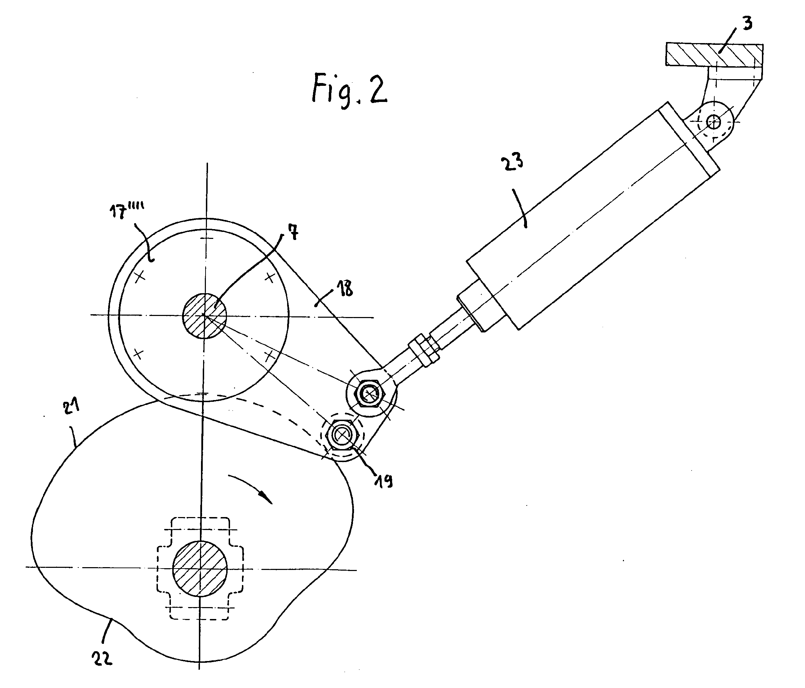

Wie aus Fig. 2 hervorgeht, besitzt die Kurvenscheibe 20 eine erste Kurvenbahn 21 und eine in gleicher Ebene liegende anschließende zweite Kurvenbahn 22. Zugleich geht aus Fig. 2 hervor, daß der Hebel 18 über eine Zylinder-Kolben-Einheit 23 steuerbar ist, die einerseits an einer Gehäusewandung 3 der Maschine und andererseits über einen Gelenkkopf am Hebel 18 selbst angelenkt ist.

Wie wiederum aus Fig. 1 hervorgeht, ist die Antriebswelle 7 über Stützlager 24 in einer weiteren Gehäusewandung 26 gelagert. In der Nähe der Stützlager 24 ist die Antriebswelle 7 mit einer als Magnetbremse ausgebildeten Bremse 25 verbunden.

Die Funktion der Vorrichtung ist wie folgt:

Zum Auskuppeln der Dosierstation wird das Kupplungsteil 13 mittels der Zylinder-Kolben-Einheit 16 in die in Fig. 1 mit strichpunktierte Linien dargestellte Lage verschoben. Da die Antriebswelle 7 wegen der Ausbildung der Kupplung als Einzahn-Kupplung nur an einer bestimmten Stelle ihrer 360° Drehbewegung pro Takt stehen bleiben darf, muß der Impuls zum Auskuppeln an entsprechender Stelle erfolgen. Um ein Nachlaufen der ausgekuppelten Antriebswelle 7 zu vermeiden, muß die Bremse 25 kurz vor dem Auskuppeln angezogen haben. Dies geschieht dadurch, daß die als Permanent magnetbremse ausgebildete Bremse Spannungfrei gemacht wird, so daß die Bremse einfällt.

Zum Zwecke des Einkuppelns der Antriebswelle 7 mit der Hauptantriebswelle 1 wird die Zylinder-Kolben-Einheit 23 mit Druckluft beaufschlagt und zwar in der Weise, daß die Andrückrolle 19 an die Kurvenbahn 21 der Kurvenscheibe 20 angedrückt wird. Dies geschieht an der in der Fig. 2 dargestellten Stelle. Gleichzeitig wird mittels der Zylinder-Kolben-Einheit 16 das Kupplungsteil 13 gegen das Kupplungsteil 12 gedrückt. Da an dieser Stelle die Kupplung noch nicht einrasten kann, ist die Kupplung noch wirkungslos.

Folgt nun die Andrückrolle 19 der Kurvenbahn 22, so setzt sich der Hebel 18 in eine mit der Hauptantriebswelle 1 drehgleiche Drehbewegung. Über den Freilauf wird die Antriebswelle 7 nun ebenfalls in Rotation gebracht. Die Kurvenscheibe 20 ist so eingestellt und berechnet, daß bei dieser Drehbewegung die beiden Kupplungsteile 12 und 13 bei fast gleicher Drehzahl einrasten. Der Hebel 18 wird mittels der Zylinder-Kolben-Einheit 23 danach wieder in seine Ruhelage geschwenkt. Die Bremse 25 wird kurz nach dem Einkuppeln gelüftet. Da im Hebel 18 der Freilauf 17 gelagert ist, kann nach dem Einkuppeln die Antriebswelle 7 von der Hauptantriebswelle 1 angetrieben werden.

Für die Vorbeschleunigung ist jede denkbare Energieeinleitung einsetzbar. Geeignet ist z. B. auch ein Hubmagnet als Vorbeschleuniger.

## Patentansprüche

1. Vorrichtung zum Ein- und Auskuppeln einer getriebenen Antriebswelle (7) einer Arbeitsstation einer Maschine, insbesondere einer Verpackungsmaschine, mit bzw von einer Hauptantriebswelle (1) der Maschine mittels einer formschlüssig wirkenden Kupplung (12,13) vorzugsweise einer Einzahnklauenkupplung und mit einer die Antriebswelle (7) mit nahezu gleicher Drehzahl und gleicher Drehbewegung wie die Hauptantriebswelle (1) vorbeschleunigenden Beschleunigereinrichtung, **dadurch gekennzeichnet**, daß die Hauptantriebswelle (1) und die Antriebswelle (7) parallel zueinander versetzt angeordnet sind und die Beschleunigereinrichtung eine Verstelleinheit (23) aufweist, die an ihrem einen Ende an einem Maschinengehäuse und an ihrem anderen Ende an einem Hebel (18) angelenkt ist, der über einen Freilauf (17) auf der mit einer Bremse (25) verbundenen Antriebswelle (7) schwenkbar gelagert ist und im Bereich seines freien Endes eine Andrückrolle (19) aufweist, die mit einem auf der Hauptantriebswelle (1) drehfest angeordneten Kurvenkörper (20) zusammenwirkt.

2. Vorrichtung nach Anspruch 1, **dadurch gekennzeichnet**, daß der Kurvenkörper als offene Kurvenscheibe (20) ausgebildet ist.

3. Vorrichtung nach Anspruch 1 oder 2, **dadurch gekennzeichnet**, daß die Verstelleinheit von einer druckmittelbeaufschlagten Zylinder-Kolben-Einheit (23) gebildet ist.

4. Vorrichtung nach einem oder mehreren der Ansprüche 1 bis 3, **dadurch gekennzeichnet**, daß die Bremse als Magnetbremse (25) ausgebildet ist.

5. Vorrichtung nach einem oder mehreren der Ansprüche 1 bis 4, **dadurch gekennzeichnet**, daß ein über eine Keil-Nut-Verbindung auf der Antriebwelle (7) axial verschiebbarer erster Kupplungsteil (13) der forschlüssig wirkenden Kupplung (12, 13) über eine Betätigungseinrichtung (14) mit einer eine Zylinder-Kolben-Einheit (16) aufweisenden einstellbaren Verstelleinrichtung verbunden ist.

6. Vorrichtung nach einem oder mehreren der Ansprüche 1 bis 4, **dadurch gekennzeichnet**, daß ein zweiter Kupplungsteil (12) der formschlüssig wirkenden Kupplung (12, 13) mit einem auf der Antriebswelle (7) sitzenden Zahnrad (6) verbunden ist, das über einen Endlostrieb (5) mit einem auf der parallel zur Antriebswelle (7) angeordneten Hauptantriebswelle (1) sitzenden Antriebszahnrad (4) in Wirkverbindung steht.

## Claims

1. Device for coupling and uncoupling a driven drive shaft (7) in a working station of a machine, particularly a packing machine, to or from a main drive shaft (1) of the machine by means of a positively acting clutch (12, 13), preferably a single-tooth claw clutch, said device being provided with an accelerating means which pre-accelerates the drive shaft (7) at approximately the same speed of rotation and with the same rotary movement as the main drive shaft (1), characterised in that the main drive shaft (1) and the drive shaft (7) are offset parallel to one another and the accelerating means has an control unit (23) which at one end is articulated on a machine casing and at its other end on a lever (18) which is swivellably mounted by means of a freewheel (17) on the drive shaft (7) connected to a brake (25) and which, in the region of its free end, has a pressure roller (19) cooperating with a cam body (20) arranged on the main drive shaft (1) securely against rotation.

2. Device according to Claim 1, characterised in that the cam body is in the form of an open cam disc (20).

3. Device according to Claim 1 or 2, characterised in that the control unit is formed by a cylinder and piston unit (23) loaded by a pressure medium.

4. Device according to one or more of Claims 1 to 3, characterised in that the brake is in the form of a magnetic brake (25).

5. Device according to one or more of Claims 1 to 4, characterised in that a first part (13), which is axially slidable on the drive shaft (7) by means of a key and recess connection, of the positively acting clutch (12, 13) is connected by way of an actuating device (14) to an adjustable control device which is provided with a cylinder and piston unit (16).

6. Device according to one or more of Claims 1 to 4, characterised in that a second part (12) of the positively acting clutch (12, 13) is connected to a gear (6) mounted on the drive shaft (7) and operatively connected via an endless drive means (5) to a driving gear (4) mounted on the main drive shaft (1) disposed parallel to the drive shaft (7).

## Revendications

1. Dispositif pour embrayer et débrayer un arbre moteur (7) entraîné d'une station de travail d'une machine, en particulier d'une machine d'emballage, avec respectivement d'un arbre moteur principal (1) de la machine au moyen d'un accouplement (12, 13) agissant par une liaison de forme, de préférence un accouplement à griffes à une dent et avec un dispositif d'accélération préaccélérant l'arbre moteur (7) avec pratiquement la même vitesse de rotation et le même mouvement de rotation que l'arbre moteur principal (1), caractérisé en ce que l'arbre moteur principal (1) et l'arbre moteur (7) sont disposés en décalage parallèlement l'un à l'autre et en ce que le dispositif d'accélération comporte une unité de réglage (23), qui est articulée par sa première extrémité à une carcasse de la machine et par son autre extrémité à un levier (18), qui est pivotant par une roue libre (17) sur l'arbre moteur (7) raccordé à un frein (25) et qui présente dans la région de son extrémité libre un rouleau de pression (19), qui coopère avec un corps de came (20) calé sur l'arbre moteur principal (1).

2. Dispositif suivant la revendication 1, caractérisé en ce que le corps de came est constitué par un disque de came (20) ouvert.

3. Dispositif suivant la revendication 1 ou 2, caractérisé en ce que l'unité de réglage est formée d'une unité de vérin (23) actionnée par un fluide sous pression.

4. Dispositif suivant une ou plusieurs des revendications 1 à 3, caractérisé en ce que le frein est constitué par un frein magnétique (25).

5. Dispositif suivant une ou plusieurs des revendications 1 à 4, caractérisé en ce qu'une première pièce d'accouplement (13) de l'accouplement (12, 13) agissant par une liaison de forme, coulissant axialement sur l'arbre moteur (7) par un assemblage à rainure et clavette, soit reliée par un dispositif d'actionnement (14) à un dispositif de réglage réglable comportant une unité de vérin (16).

6. Dispositif suivant une ou plusieurs des revendications 1 à 4, caractérisé en ce qu'une seconde pièce d'accouplement (12) de l'accouplement (12, 13) agissant par une liaison de forme soit reliée à une roue dentée (6) montée sur l'arbre moteur (7), qui se trouve en liaison active par une transmission sans fin (5) avec une roue dentée motrice (4) montée sur l'arbre moteur principal (1) parallèle à l'arbre moteur (7).
